# EUROPÄISCHE PATENTANMELDUNG

(11) **EP 2 439 519 A1**
(43) Veröffentlichungstag der Anmeldung: **11.04.2012**
(21) Anmeldenummer: 11008145.2
(22) Anmeldetag: 07.10.2011
(51) Int. Cl.: G01N 21/954

(54) **Vorrichtung zur Überprüfung von Innenmantelflächen von Schlauch- und/oder Rohrleitungen**

(30) Priorität: 09.10.2010 DE 102010048011
(71) Anmelder: Walter Gondrom GmbH & Co. KG, 50859 Köln (DE)
(72) Erfinder: Gerdell, Frank, 50672 Köln (DE)
(74) Vertreter: Stenger, Watzke & Ring

(57) **Zusammenfassung**

Die Erfindung betrifft eine Vorrichtung und ein Verfahren zur Überprüfung von Innenmantelflächen von Schlauch- und/oder Rohrleitungen. Zur einfacheren Handhabung und zum sichereren Überprüfen wird vorrichtungsseitig vorgeschlagen eine Vorrichtung mit einem Halteelement (6) und einem Leuchtmittel (9), wobei das Halteelement (6) mit einem ersten Ende der Schlauch- und/oder Rohrleitung derart verbindbar ist, dass die Innenmantelfläche der Schlauch- und/oder Rohrleitung beobachtbar ist, und wobei das Leuchtmittel (9) derart in dem Halteelement gehalten ist, dass ein von dem Leuchtmittel (9) emittierter Lichtstrahl die Innenmantelfläche der Schlauch- und/oder Rohrleitung beleuchtet. Verfahrensseitig wird vorgeschlagen ein Verfahren zur Überprüfung von Innenmantelflächen von Schlauch- und/oder Rohrleitungen, insbesondere von für die Förderung von Feststoffen in Pulver- oder Granulatform aus einem Silofahrzeug vorgesehenen biegesteifen Schlauch- und/oder Rohrleitungen, wobei ein erstes Ende der Schlauch- und/oder Rohrleitung mit einem Halteelement (6) verbunden wird, und dass in das Halteelement (6) ein Leuchtmittel (9) derart eingesetzt wird, dass mit einem von dem Leuchtmittel (9) emittierbaren Lichtstrahl die Innenmantelfläche der Schlauch- und/oder Rohrleitung zur Detektion von Verunreinigungen und/oder Beschädigungen ausgeleuchtet wird.

## Beschreibung

Die Erfindung betrifft eine Vorrichtung zur Überprüfung von Innenmantelflächen von Schlauch- und/oder Rohrleitungen.

Schlauch- und/oder Rohrleitungen sind aus dem Stand der Technik bekannt. Eine Schlauchleitung beispielsweise ist gebildet aus einem Schlauch, welcher insbesondere Seele, Einlage und Decke aufweisen kann, und endseitig Anschlussmittel, insbesondere eine Bajonettverbindung, eine Storzkupplung, ein Gewinde oder dergleichen, aufweist.

Im Wesentlichen biegesteife Schlauchleitungen kommen insbesondere bei Silotransportern und/oder Tankfahrzeugen zum Einsatz. Sie dienen dabei zum Be-und/oder Entladen des Silos und/oder Tanks mit Transportgut. Solche Schlauchleitungen weisen eine Länge von etwa vier bis fünf Metern auf, und werden gerade ausgerichtet am Silotransporter und/oder Tankfahrzeug mitgeführt. In einem solchen Transportzustand sind die Anschlussmittel der Schlauchleitungen mit Schutzelementen verschlossen.

Die Transportgüter können beispielsweise Flüssigkeiten oder Gase, insbesondere aber Feststoffe in Pulver- oder Granulatform umfassen. Um die Qualität des Transportguts während des Be- und/oder Entladens mittels einer Schlauch- und/oder Rohrleitung zu gewährleisten, sind die Schlauch- und/oder Rohrleitungen bestmöglich von Verunreinigungen freizuhalten.

Es ist daher die **Aufgabe** der Erfindung, eine Vorrichtung zur Überprüfung von Innenmantelflächen von Schlauch- und/oder Rohrleitungen, insbesondere von für die Förderung von Feststoffen in Pulver- oder Granulatform aus einem Silofahrzeug vorgesehenen biegesteifen Schlauch- und/oder Rohrleitungen vorzuschlagen, die bei einfacher Handhabung ein sicheres Überprüfen der Schlauch- und/oder Rohrleitung gewährleistet.

Zur **Lösung** wird vorrichtungsseitig vorgeschlagen eine Vorrichtung mit einem Halteelement und einem Leuchtmittel, wobei das Halteelement mit einem ersten Ende der Schlauch- und/oder Rohrleitung derart verbindbar ist, dass die Innenmantelfläche der Schlauch- und/oder Rohrleitung beobachtbar ist, und wobei das Leuchtmittel derart in dem Halteelement gehalten ist, dass ein von dem Leuchtmittel emittierter Lichtstrahl die Innenmantelfläche der Schlauch- und/oder Rohrleitung beleuchtet.

Die erfindungsgemäße Vorrichtung ist insbesondere auch zur Überprüfung von Innenmantelflächen von für die Förderung von Stoffen aus einem Tankfahrzeug vorgesehenen beigesteifen Schlauch- und/oder Rohrleitungen geeignet.

Der Kern der Erfindung besteht also darin, ein Halteelement vorzuschlagen, welches in einfacher Weise mit einem ersten Ende einer Schlauch- und/oder Rohrleitung verbindbar ist. Dazu muss bei einer zu prüfenden Schlauch- und/oder Rohrleitung beispielsweise lediglich eine endseitige Schutzkappe entfernt werden, und das Halteelement stattdessen an dem ersten Ende der Schlauch- und/oder Rohrleitung montiert werden. Das Leuchtmittel ist ferner derart in dem Halteelement gehalten, dass ein von dem Leuchtmittel emittierter Lichtstrahl die Innenmantelfläche der Schlauch- und/oder Rohrleitung beleuchtet. In vorteilhafter Weise werden Verunreinigungen, welche sich auf der Innenmantelfläche der Schlauch- und/oder Rohrleitung befinden, beleuchtet und werfen in der Folge einen Schatten auf die Innenmantelfläche. Das Halteelement ist dabei derart ausgebildet, dass die Innenmantelfläche der Schlauch- und/oder Rohrleitung beobachtbar ist. Es können somit mögliche Verunreinigungen in der Schlauch- und/oder Rohrleitung beobachtet werden. In der Folge kann bewertet werden, ob die Schlauch-und/oder Rohrleitung den Anforderungen an eine Reinheit zum Be- und/oder Entladen genügt. Das Leuchtmittel kann aber auch Bestandteil der Schutzkappe sein, sofern diese ergänzend die Betrachtung des ausgeleuchteten Innenraums der Schlauch- und/oder Rohrleitung ermöglicht.

Das Halteelement ist derart ausgebildet, dass die Innenmantelfläche der Schlauch-und/oder Rohrleitung beobachtbar ist. Hierzu weist das Halteelement ein Beobachtungsmittel auf und/oder ist derart ausgebildet, dass es die Schlauch- und/oder Rohrleitung nicht vollständig verschließt. Das Beobachtungsmittel ist beispielsweise eine Öffnung, eine Durchbrechung, ein transparenter und/oder transluzenter Abschnitt, insbesondere ein Fenster, und/oder eine Bildaufnahmeeinrichtung, insbesondere Videokamera, CCD-Sensor und/oder dergleichen. Eine die Schlauch- und/oder Rohrleitung nicht vollständig verschließende Ausbildung des Halteelementes kann beispielsweise als Stern-Form des Halteelementes realisiert sein. Bei dieser Stern-Form weist das Halteelement Stern-förmig zulaufende Arme auf, mit welchen das Haltelement an der Schlauch- und/oder Rohrleitung befestigbar ist. Durch die Zwischenräume zwischen den einzelnen Armen kann jedoch von außerhalb der Schlauch- und/oder Rohrleitung das Innere der Schlauch- und/oder Rohrleitung beobachtet werden.

Mit der erfindungsgemäßen Vorrichtung können Schlauch- und/oder Rohrleitungen sowohl auf Beschädigungen als auch auf Verunreinigungen der Innenmantelfläche untersucht werden. Beschädigungen sind zu vermeiden, da sie zum einen die bestimmungsgemäße Verwendung der Schlauch- und/oder Rohrleitungen beeinträchtigen können, und zum anderen die Ansammlung von Verunreinigungen fördern.

Gemäß einer vorteilhaften Weiterbildung der Erfindung umfasst die Vorrichtung ein Reflektionselement, welches mit einem zweiten, dem ersten Ende gegenüberliegend angeordneten Ende der Schlauch- und/oder Rohrleitung verbindbar ist, wobei das Reflektionselement derart am zweiten Ende der Schlauch- und/oder Rohrleitung befestigbar ist, dass der von dem Leuchtmittel emittierte Lichtstrahl auf die Innenmantelfläche der Schlauch- und/oder Rohrleitung reflektiert wird. In vorteilhafter Weise sorgt das Reflektionselement für eine verbesserte Ausleuchtung der Schlauch-und/oder Rohrleitung. Verunreinigungen und/oder Beschädigungen lassen sich somit noch besser erkennen. Das Reflektionselement weist dazu einen Reflektionskörper auf. Dieser ist zur optischen Reflektion ausgebildet, beispielsweise als Spiegel, Retroreflektor, insbesondere Rückstrahler, Katzenauge oder dergleichen. Der Reflektionskörper ist im montierten Zustand auf einer der Schlauch- und/oder Rohrleitung zugewandten Großfläche des Reflektionselements angeordnet.

Versuche der Anmelderin haben gezeigt, dass die erfindungsgemäße Vorrichtung auch ohne das Reflektionselement hinreichend gute Untersuchungsergebnisse ermöglicht. Die Untersuchungsergebnisse können sogar je nach Ausbildung der Schlauch- und/oder Rohrleitung und/oder der zu detektierenden Beschädigungen und/oder Verunreinigungen der Innenmantelfläche noch besser ausfallen, wenn die Vorrichtung ohne das Reflektionselement verwendet wird.

Gemäß einer vorteilhaften Weiterbildung der Erfindung umfasst die Vorrichtung ein Beobachtungselement, welches mit einem zweiten, dem ersten Ende gegenüberliegend angeordneten Ende der Schlauch- und/oder Rohrleitung verbindbar ist, wobei das Beobachtungselement derart am zweiten Ende der Schlauch- und/oder Rohrleitung befestigbar ist, dass die Innenmantelfläche der Schlauch- und/oder Rohrleitung beobachtbar ist. Alternativ kann auch vorgesehen sein, dass das Reflektionselement selbst derart ausgebildet ist, dass die Innenmantelfläche der Schlauch- und/oder Rohrleitung beobachtbar ist. Hierzu weist das Beobachtungselement beziehungsweise das Reflektionselement eine Beobachtungseinrichtung auf, beispielsweise ein transparentes und/oder transluzentes Fenster, eine Videokamera, ein CCD-Chip und/oder dergleichen. Das Fenster kann aus Plexiglas, Glas und/oder einem anderen geeigneten Material bestehen. Entscheidend ist, dass die Innenmantelfläche der Schlauch- und/oder Rohrleitung nicht nur von dem das Halteelement aufnehmenden Ende ermöglicht ist, sondern auch vom das Beobachtungselement beziehungsweise das Reflektionselement aufnehmenden Ende. Dies ermöglicht weiter verbesserte Untersuchungsergebnisse an der der Schlauch- und/oder Rohrleitung.

Gemäß einer vorteilhaften Weiterbildung der Erfindung sind beziehungsweise ist das Halteelement und/oder das Reflektionselement als Klemmvorrichtung und/oder als Deckel ausgebildet, wobei die Klemmvorrichtung und/oder der Deckel mittels einer Bajonettverbindung, einer Storzkupplung, einem Gewinde, einem Flansch oder mittels Kraftschluss mit dem jeweiligen Ende der Schlauch- und/oder Rohrleitung verbindbar ist.

Ein Deckel kann dabei im Wesentlichen wie ein endseitiges Schutzelement für die Schlauch- und/oder Rohrleitung ausgebildet sein, wobei der als Halteelement ausgebildete Deckel im Unterschied zu dem endseitigen Schutzelement Mittel zum Beobachten der Innenmantelfläche der Schlauch- und/oder Rohrleitung und ein Leuchtmittel aufweist, und/oder der als Reflektionselement ausgebildete Deckel einen Reflektionskörper aufweist. Eine Klemmvorrichtung kann zwei, drei, oder eine Vielzahl von Befestigungselementen aufweisen, die unter Anpressdruck kraftschlüssig mit dem jeweiligen Ende der Schlauch- und/oder Rohrleitung verbindbar sind. Die Befestigungselemente können elastisch auslenkbare Beine, Krallen oder dergleichen umfassen. Auch ein Aufschieben und/oder Einstecken der Klemmvorrichtung auf und/oder in die Schlauch- und/oder Rohrleitung ist denkbar.

Klemmvorrichtung und/oder Deckel können Verbindungsmittel wie eine Bajonettverbindung, eine Storzkupplung, ein Gewinde oder dergleichen aufweisen, welche zu den endseitig von einer Schlauch- und/oder Rohrleitung bereitgestellten Verbindungsmitteln korrespondieren. In einfacher Weise lässt sich somit die Klemmvorrichtung und/oder der Deckel mit einem bereits standardisierten Anschlussmittel verbinden.

Gemäß einer vorteilhaften Weiterbildung der Erfindung weist das als Deckel ausgebildete Halteelement wenigstens eine Durchbrechung auf, in welcher eine transparente Folie oder ein transparentes biegesteifes Element, insbesondere Glas oder Kunststoff, angeordnet ist. Es kann aber auch vorgesehen sein, dass die Durchbrechung nicht mittels eines Elements verschlossen ist. Entscheidend ist, dass die Durchbrechung und/oder das transparente Element so wenig Licht absorbiert, so dass ein gutes Durchschauen mit dem menschlichen Auge gewährleistet ist. Es kann dabei eine, zwei, oder eine Vielzahl an Durchbrechungen vorgesehen sein. Es kann aber auch vorgesehen sein, dass in den Deckel ein transparentes festes Element eingefasst ist, welches vollständig umlaufend ausgebildet ist. In vorteilhafter Weise stellt der Deckel somit ein Mittel bereit, durch welches die Innenmantelfläche der Schlauch- und/oder Rohrleitung beobachtbar ist. Im Falle einer Klemmvorrichtung kann vorgesehen sein, dass die Klemmvorrichtung derart ausgebildet ist, dass eine endseitige Öffnung der Schlauch- und/oder Rohrleitung nicht vollständig durch die Klemmvorrichtung abgedeckt ist, so dass die Innenmantelfläche der Schlauch- und/oder Rohrleitung durch Ausnehmungen und/oder Öffnungen der montierten Klemmvorrichtung beobachtbar ist.

Gemäß einer vorteilhaften Weiterbildung der Erfindung ist am Halteelement eine Kamera derart angeordnet, dass diese zumindest ein Bild der Innenmantelfläche der Schlauch-und/oder Rohrleitung aufnimmt, welches auf einem Monitor darstellbar ist. Die Kamera kann dabei zentriert oder exzentrisch in dem Halteelement angeordnet sein. Die Kamera kann ferner geeignete Kommunikationsmittel, beispielsweise eine drahtlose Kommunikationsverbindung bereitstellen, so dass ein durch die Kamera aufgenommenes Bild entfernt beobachtbar ist.

Gemäß einer vorteilhaften Weiterbildung der Erfindung weist das Halteelement einen Ringkörper auf, der vorzugsweise hohlzylinderförmig ausgebildet ist und der Aufnahme des Leuchtmittels dient. Der Ringkörper kann dabei als transparentes festes Element, beispielsweise aus Glas oder Kunststoff, ausgebildet sein. In einer Öffnung, insbesondere zentrierten Öffnung des Ringkörpers kann das Leuchtmittel montierbar sein. In der Öffnung, insbesondere zentrierten Öffnung des Ringkörpers kann aber auch eine hohlzylinderförmige Leuchtmittelaufnahme montierbar sein. Insbesondere kann die Leuchtmittelaufnahme einen umlaufenden Kragen aufweisen, der in die Öffnung des Ringkörpers fügbar ist. Die Verbindung zwischen Leuchtmittelaufnahme und Ringkörper kann kraft- und/oder formschlüssig ausgebildet sein. Insbesondere ist ein Verkleben und/oder eine nicht zerstörungsfrei lösbare Verbindung denkbar. In vorteilhafter Weise wird somit eine einfach zu montierende Aufnahme für das Leuchtmittel bereitgestellt, welche Aufnahme fest mit dem Halteelement verbunden sein kann. Das Leuchtmittel lässt sich ferner leicht auswechselbar im Halteelement montieren.

Gemäß einer vorteilhaften Weiterbildung der Erfindung ist das Leuchtmittel kraft- und/oder formschlüssig im Ringkörper befestigbar und insbesondere mit einem Befestigungsmittel fixierbar. Das Befestigungsmittel kann insbesondere ein Gewindestift oder dergleichen sein. In einfacher Weise lässt sich das Leuchtmittel fest und lagesicher mit der Leuchtmittelaufnahme verbinden.

Gemäß einer vorteilhaften Weiterbildung der Erfindung weist das Leuchtmittel einen Schalter auf, mit dem die Emission des Lichtstrahls aktivierbar ist. Der Schalter kann als Totmannschalter ausgebildet sein. Damit ist vorgesehen, dass das Leuchtmittel nur bei gedrücktem Schalter leuchtet. Das Leuchtmittel umfasst dabei bevorzugt eine autarke Energieversorgung, das heißt eine Batterie, einen Akkumulator oder dergleichen. In vorteilhafter Weise ist somit sichergestellt, dass keine Energie verschwendet wird, wenn das Leuchtmittel nicht gebraucht wird. Es kann dabei vorgesehen sein, dass der Schalter endseitig am Leuchtmittel angeordnet ist, das heißt an einer dem Austritt des emittierten Lichtstrahls abgewandten Seite, und damit für einen Nutzer zugänglich.

Verfahrensseitig wird mit der Erfindung vorgeschlagen ein Verfahren zur Überprüfung von lnnenmantelflächen von Schlauch- und/oder Rohrleitungen, insbesondere von für die Förderung von Feststoffen in Pulver- oder Granulatform aus einem Silofahrzeug vorgesehenen biegesteifen Schlauch- und/oder Rohrleitungen, wobei ein erstes Ende der Schlauch- und/oder Rohrleitung mit einem Halteelement verbunden wird, und dass in das Halteelement ein Leuchtmittel derart eingesetzt wird, dass mit einem von dem Leuchtmittel emittierbaren Lichtstrahl die Innenmantelfläche der Schlauch- und/oder Rohrleitung zur Detektion von Verunreinigungen und/oder Beschädigungen ausgeleuchtet wird.

Erfindungsgemäß wird das Halteelement endseitig an einer Schlauch- und/oder Rohrleitung montiert. Dabei kann vorgesehen sein, dass das Halteelement mittels Verschrauben, Verdrehen, Verrasten, Aufschieben, Aufklippsen oder dergleichen montiert wird. Anschließend wird ein durch das Halteelement bereitgestelltes Leuchtmittel aktiviert, wobei in der Folge mittels eines vom Leuchtmittel emittierten Lichtstrahls die Innenmantelfläche der Schlauch- und/oder Rohrleitung ausgeleuchtet wird. Durch eventuelle Verunreinigungen werden Schatten auf die Innenmantelfläche geworfen. Durch vom Halteelement bereitgestellte Beobachtungsmittel, insbesondere eine Durchbrechung, Öffnung oder dergleichen, wird durch einen Benutzer die Innenmantelfläche auf Verunreinigungen oder dergleichen geprüft.

Gemäß einer vorteilhaften Weiterbildung des erfindungsgemäßen Verfahrens wird ein Reflektionselement derart mit einem zweiten, dem ersten Ende gegenüberliegend angeordneten Ende der Schlauch- und/oder Rohrleitung verbunden, dass der von dem Leuchtmittel emittierte Lichtstrahl auf die Innenmantelfläche der Schlauch- und/oder Rohrleitung reflektiert wird.

Gemäß einer vorteilhaften Weiterbildung des erfindungsgemäßen Verfahrens wird mit einer Kamera zumindest ein Bild der Innenmantelfläche der Schlauch- und/oder Rohrleitung aufgenommen und auf einem Monitor dargestellt.

Gemäß einer vorteilhaften Weiterbildung des erfindungsgemäßen Verfahrens wird das Halteelement und/oder das Reflektionselement mit dem jeweiligen Ende der Schlauch-und/oder Rohrleitung durch Verschrauben oder Verdrehen oder Verrasten oder Aufschieben oder Aufklippsen montiert.

Weitere Vorteile und Merkmale der Erfindung ergeben sich aus der nachfolgenden

Figurenbeschreibung. Dabei zeigen:
- Fig. 1: eine Schlauchleitung mit Prüfvorrichtung in Explosivdarstellung,
- Fig. 2: ein Schnitt durch eine Schlauchleitung mit Prüfvorrichtung in Explosivdarstellung,
- Fig. 3: die Komponenten der erfindungsgemäßen Haltevorrichtung mit Leuchtmittel,
- Fig. 4: Schnitt durch eine Schlauchleitung mit Prüfvorrichtung im endmontierten Zustand,

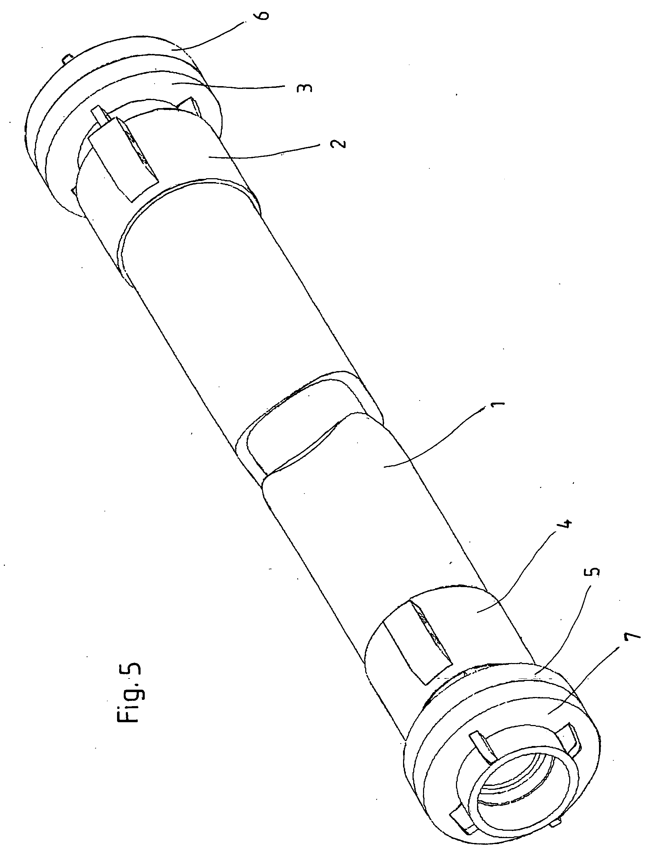

- Fig. 5: perspektivische Darstellung einer Schlauchleitung mit Prüfvorrichtung im endmontierten Zustand, und

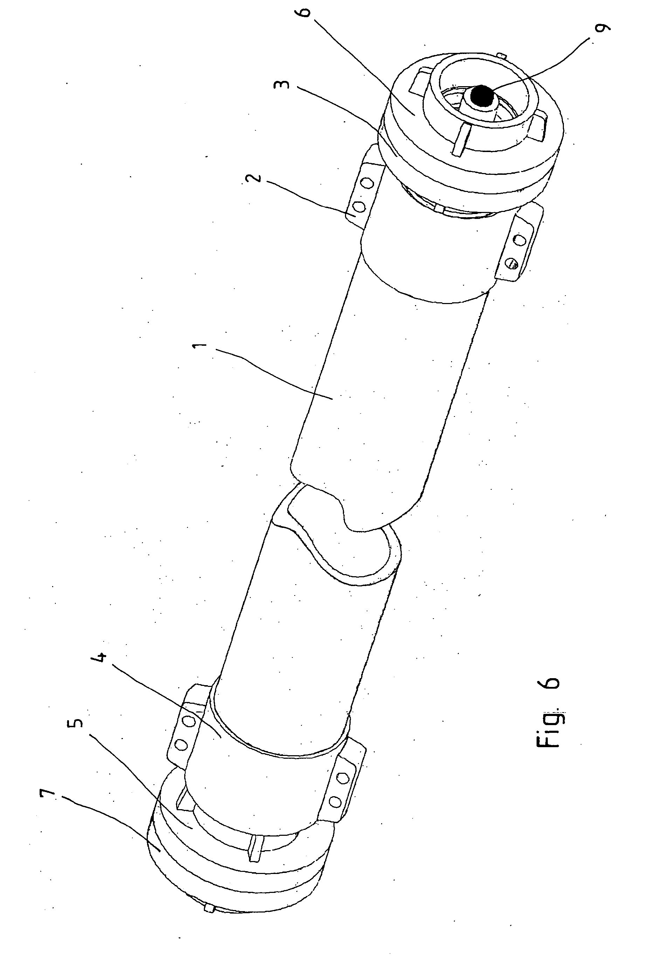

- Fig. 6: Schlauchleitung mit Prüfvorrichtung im endmontierten Zustand in perspektivischer Darstellung.

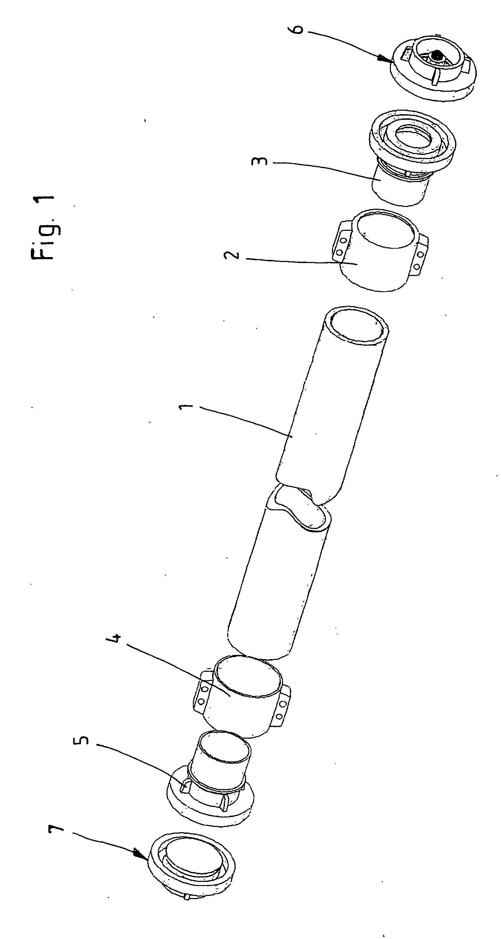

Fig. 1 zeigt zunächst die Komponenten einer Schlauchleitung. Diese umfasst einen Schlauch 1 und zwei im Wesentlichen hohlzylinderförmige Muffen 2 und 4, welche Muffen durch eine Klemmfassung, insbesondere mit zwei Klemmbacken, gebildet sein können. Die Schlauchleitung umfasst ferner zwei Anschlussflansche 3 und 5. Die Muffen 2 und 4 sind jeweils endseitig auf den Schlauch 1 aufgeschoben. Die Anschlussflansche 3 und 5 sind mittels eines hülsenartigen Fortsatzes jeweils endseitig in den Schlauch 1 eingeführt. Die Muffen 2 und 4 weisen geeignete Mittel auf, mittels derer die Anschlussflansche 3 und 5 und der Schlauch 1 kraftschlüssig und/oder formschlüssig miteinander verbunden sind.

Die Anschlussflansche 3 und 5 können baugleich ausgebildet sein. An ihrer Anschlussseite weisen die Anschlussflansche 3 und 5 eine Verbindungsstelle auf, die geeignet ist die Schlauchleitung mit einem Silo, einem Tank, einer Rohrleitung, einer Armatur oder dergleichen zu verbinden. Hierzu weisen die Anschlussstellen Verbindungsmittel wie beispielsweise Außen- oder Innengewinde, Bajonettnocken oder - führungen, Rastmittel oder dergleichen auf. Insbesondere können die Anschlussstellen auch als Feuerwehrkupplung, insbesondere als Storzkupplung ausgebildet sein.

Fig. 1 zeigt außerdem die erfindungsgemäße Vorrichtung zur Überprüfung von Innenmantelflächen. Diese umfasst ein Halteelement 6 und/oder ein Reflektionselement 7. Halteelement 6 und/oder Reflektionselement 7 weisen ihrerseits eine Anschlussseite auf, welche Verbindungsmittel bereitstellt, die zu den Verbindungsmitteln der Anschlussflansche 3 und 5 korrespondieren. Insofern lassen sich Halteelement 6 und/oder Reflektionselement 7 in einfacher Weise mittels bereits vorhandenen Verbindungsstellen mit einer Schlauchleitung verbinden.

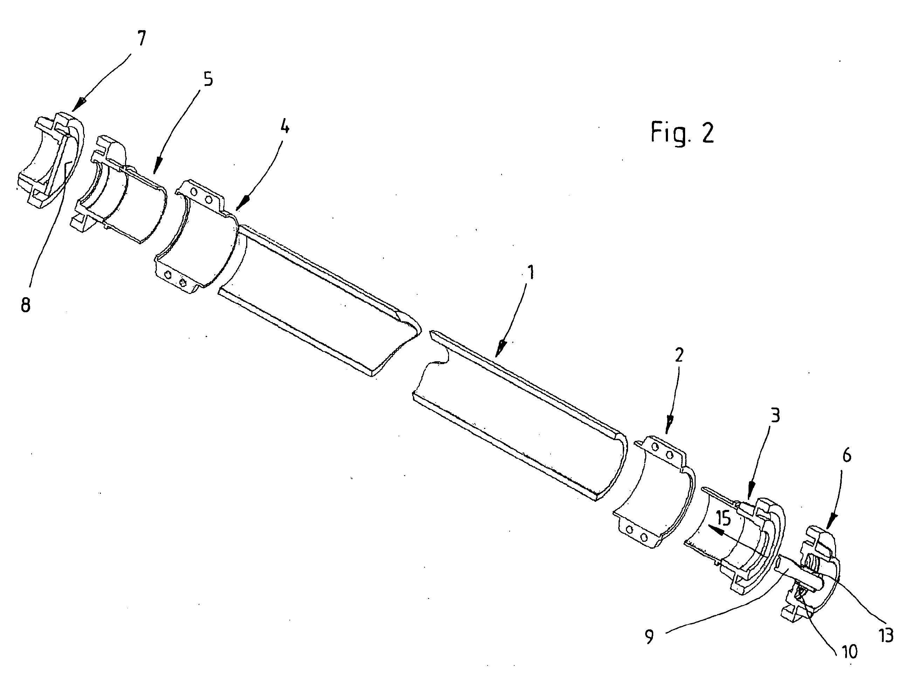

Der Aufbau des Halteelements 6 ist insbesondere in Fig. 2 zu sehen. Das Halteelement 6 ist durch einen ringförmigen Körper gebildet. In diesem ringförmigen Körper ist eine ringförmige Haltevorrichtung eingefasst. Diese ist vorliegend transparent ausgebildet, und dient damit gleichzeitig als Schauvorrichtung 10. In einer zentrierten Öffnung der Schauvorrichtung 10 ist eine Leuchtmittelaufnahme 13 angeordnet. Die Leuchtmittelaufnahme 13 dient der Aufnahme des Leuchtmittels 9. Das Leuchtmittel 9 ist dabei vorliegend in der Art einer Taschenlampe ausgebildet. Die Leuchtrichtung 15 eines vom Leuchtmittel 9 emittierten Lichtkegels verläuft dabei auf der Mittelachse der Schlauchleitung und ist zum Leuchten auf die Innenmantelfläche der Schlauchleitung ausgebildet.

Die Leuchtmittelaufnahme 13 kann dabei fest mit der Schauvorrichtung 10 verbunden sein, beispielsweise durch eine entsprechende Passung, eine Klebverbindung oder dergleichen. Es kann jedoch auch vorgesehen sein, dass die Leuchtmittelaufnahme 13 auswechselbar innerhalb der Schauvorrichtung 10 angeordnet ist.

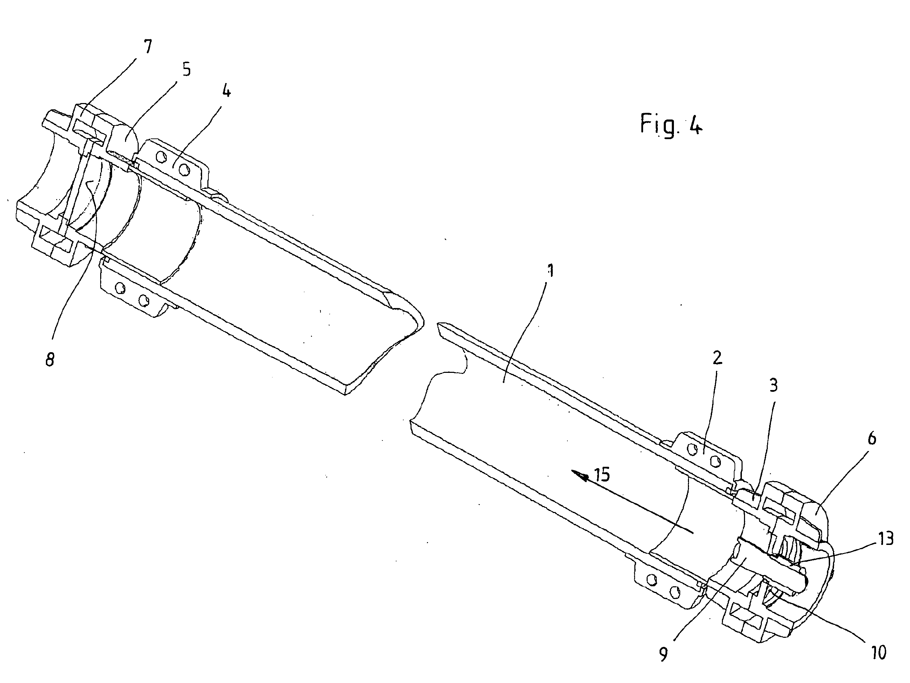

Insbesondere die Figuren 1 und 2 zeigen, dass die Vorrichtung ein Reflektionselement 7 umfasst. Das Reflektionselement 7 weist einen Reflektionskörper 8 auf, der in einer Ebene parallel zu der Querschnittsebene der Schlauchleitung angeordnet ist und zum Reflektieren in die Innenmantelfläche der Schlauchleitung ausgebildet ist. Der Reflektionskörper 8 kann dabei durch einen Spiegel oder dergleichen gebildet sein. Fig. 4 zeigt die Schlauchleitung mit endmontiertem Halteelement 6 und Reflektionselement 7. Das von dem Leuchtmittel emittierte Licht wird an dem Reflektionskörper 8 reflektiert und es ergibt sich eine verbesserte Ausleuchtung der Innenmantelfläche.

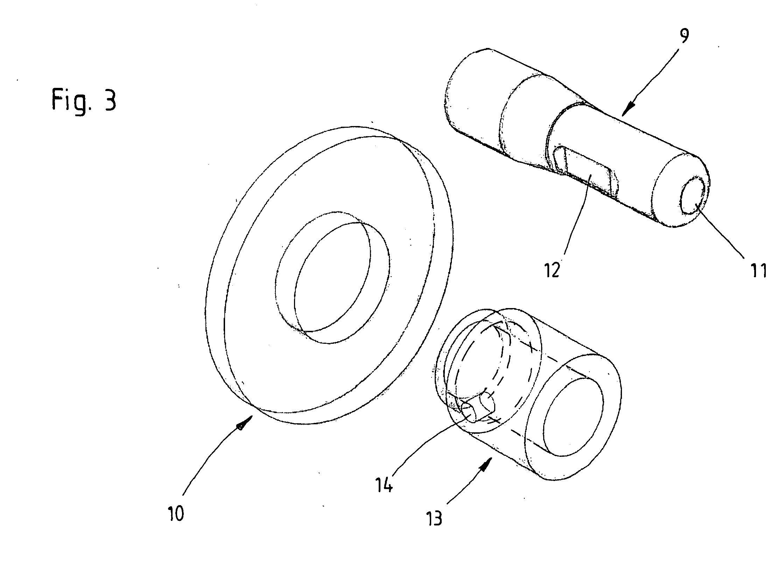

Fig. 3 zeigt die als Haltemittel ausgebildete Schauvorrichtung 10 und die Leuchtmittel 9. Die Schauvorrichtung 10 ist aus einem transparenten Material, beispielsweise Glas, Acrylglas, einem Kunststoff oder dergleichen gebildet. Die Schauvorrichtung 10 ermöglicht somit bei montiertem Halteelement 6 von außen einen Blick in das Innere der Schlauchleitung, insbesondere auf die Innenmantelfläche. In eine kreisrunde Öffnung der Schauvorrichtung 10 ist eine Leuchtmittelaufnahme 13 angeordnet. Dazu weist die Leuchtmittelaufnahme 13 einen umlaufenden Kragen auf, mit welchem die Leuchtmittelaufnahme 13 im endmontierten Zustand auf einer Großfläche der Schauvorrichtung 10 anliegt. Die Leuchtmittelaufnahme 13 weist ferner eine Ausnehmung 14 auf. Bei dieser Ausnehmung 14 kann es sich insbesondere um eine Gewindebohrung handeln. Das Leuchtmittel 9 weist hierzu eine korrespondierende Planfläche 12 auf. Im endmontierten Zustand ist das Leuchtmittel 9 beispielsweise mittels eines nicht dargestellten Gewindestifts in der Leuchtmittelaufnahme 13 fixiert.

Insbesondere mit Bezug auf Fig. 4 wird im Folgenden ein Verfahren zur Überprüfung von Innenmantelflächen von Schlauch- und/oder Rohrleitungen erläutert. Das vorbeschriebene Halteelement 6 sowie das Reflektionselement 7 werden jeweils endseitig an den Anschlussflanschen 3 und 5 einer Schlauchleitung montiert. Mittels eines in dem Halteelement 6 angeordneten Leuchtmittels 9 wird das Innere der Schlauchleitung ausgeleuchtet. Hierzu wird das Leuchtmittel 9 durch Drücken eines Schalters 11 aktiviert. In der Folge wird die Innenmantelfläche der Schlauchleitung durch einen vom Leuchtmittel 9 emittierten Lichtstrahl ausgeleuchtet. Das Licht des Leuchtmittels 9 wird ferner durch einen von dem Reflektionselement 7 bereitgestellten Reflektionskörper 8 reflektiert. Die Innenmantelfläche der Schlauchleitung wird dadurch noch besser ausgeleuchtet. Mittels einer transparenten Schauvorrichtung 10 wird das Innere der Schlauchleitung von außen beobachtet. Dabei wird durch die umlaufende Ausbildung der Schauvorrichtung 10 ein Beobachten von einer beliebigen Position um das Leuchtmittel herum ermöglicht. Eventuelle Verunreinigungen in der Schlauchleitung, beispielsweise Pulver-, Granulatrückstände oder dergleichen werfen im Licht des Leuchtmittels 9 vergleichsweise lange Schatten auf der Innenmantelfläche der Schlauchleitungen. Es kann somit in einfacher Weise und gleichzeitig sehr zuverlässig festgestellt werden, ob eine Schlauchleitung verunreinigt ist oder nicht.

### Bezugszeichenliste

- 1: Schlauch
- 2: Muffe
- 3: Anschlussflansch
- 4: Muffe
- 5: Anschlussflansch
- 6: Halteelement
- 7: Reflektionselement
- 8: Reflektionskörper
- 9: Leuchtmittel
- 10: Schauvorrichtung
- 11 1: Schalter
- 12: Planfläche
- 13: Leuchtmittelaufnahme
- 14: Ausnehmung
- 15: Leuchtrichtung

## Patentansprüche

1. Vorrichtung zur Überprüfung von Innenmantelflächen von Schlauch- und/oder Rohrleitungen, insbesondere von für die Förderung von Feststoffen in Pulver- oder Granulatform aus einem Silofahrzeug vorgesehenen biegesteifen Schlauch-und/oder Rohrleitungen, mit einem Halteelement (6) und einem Leuchtmittel (9), wobei das Halteelement (6) mit einem ersten Ende der Schlauch- und/oder Rohrleitung derart verbindbar ist, dass die Innenmantelfläche der Schlauch-und/oder Rohrleitung beobachtbar ist, und wobei das Leuchtmittel (9) derart in dem Halteelement (6) gehalten ist, dass ein von dem Leuchtmittel (9) emittierter Lichtstrahl die Innenmantelfläche der Schlauch- und/oder Rohrleitung beleuchtet.

2. Vorrichtung nach Anspruch 1, **gekennzeichnet durch** ein Reflektionselement (7), welches mit einem zweiten, dem ersten Ende gegenüberliegend angeordneten Ende der Schlauch- und/oder Rohrleitung verbindbar ist, wobei das Reflektionselement (7) derart am zweiten Ende der Schlauch- und/oder Rohrleitung befestigbar ist, dass der von dem Leuchtmittel (9) emittierte Lichtstrahl auf die Innenmantelfläche der Schlauch- und/oder Rohrleitung reflektiert wird.

3. Vorrichtung nach einem der vorangehenden Ansprüche, **dadurch gekennzeichnet, dass** das Halteelement (6) und/oder das Reflektionselement (7) als Klemmvorrichtung und/oder als Deckel ausgebildet sind beziehungsweise ist, wobei die Klemmvorrichtung und/oder der Deckel mittels einer Bajonettverbindung, einer Storzkupplung, einem Gewinde oder mittels Kraftschluss mit dem jeweiligen Ende der Schlauch- und/oder Rohrleitung verbindbar ist.

4. Vorrichtung nach Anspruch 3, **dadurch gekennzeichnet, dass** das als Deckel ausgebildete Halteelement (6) wenigstens eine Durchbrechung aufweist, in welcher eine transparente Folie oder ein transparentes biegesteifes Element, insbesondere Glas oder Kunststoff, angeordnet ist.

5. Vorrichtung nach einem der vorangehenden Ansprüche, **dadurch gekennzeichnet, dass** am Halteelement (6) eine Kamera derart angeordnet ist, dass diese zumindest ein Bild der Innenmantelfläche der Schlauch- und/oder Rohrleitung aufnimmt, welches auf einem Monitor darstellbar ist.

6. Vorrichtung nach einem der vorangehenden Ansprüche, **dadurch gekennzeichnet, dass** das Halteelement (6) einen Ringkörper aufweist, der vorzugsweise hohlzylinderförmig ausgebildet ist und der Aufnahme des Leuchtmittels (9) dient.

7. Vorrichtung nach Anspruch 6, **dadurch gekennzeichnet, dass** das Leuchtmittel (9) kraft- und/oder formschlüssig im Ringkörper befestigbar und insbesondere mit einem Befestigungsmittel fixierbar ist.

8. Vorrichtung nach einem der vorangehenden Ansprüche, **dadurch gekennzeichnet, dass** das Leuchtmittel (9) einen Schalter (11) aufweist, mit dem die Emission des Lichtstrahls aktivierbar ist.

9. Verfahren zur Überprüfung von Innenmantelflächen von Schlauch- und/oder Rohrleitungen, insbesondere von für die Förderung von Feststoffen in Pulver- oder Granulatform aus einem Silofahrzeug vorgesehenen biegesteifen Schlauch-und/oder Rohrleitungen, wobei ein erstes Ende der Schlauch- und/oder Rohrleitung mit einem Halteelement (6) verbunden wird, und dass in das Halteelement (6) ein Leuchtmittel (9) derart eingesetzt wird, dass mit einem von dem Leuchtmittel (9) emittierbaren Lichtstrahl die Innenmantelfläche der Schlauch-und/oder Rohrleitung zur Detektion von Verunreinigungen und/oder Beschädigungen ausgeleuchtet wird.

10. Verfahren nach Anspruch 9, **dadurch gekennzeichnet, dass** ein Reflektionselement (7) derart mit einem zweiten, dem ersten Ende gegenüberliegend angeordneten Ende der Schlauch- und/oder Rohrleitung verbunden wird, dass der von dem Leuchtmittel (9) emittierte Lichtstrahl auf die Innenmantelfläche der Schlauch-und/oder Rohrleitung reflektiert wird.

11. Verfahren nach Anspruch 9 oder 10, **dadurch gekennzeichnet, dass** mit einer Kamera zumindest ein Bild der Innenmantelfläche der Schlauch- und/oder Rohrleitung aufgenommen und auf einem Monitor dargestellt wird.

12. Verfahren nach einem der Ansprüche 9 bis 11, **dadurch gekennzeichnet, dass** das Halteelement (6) und/oder das Reflektionselement (7) mit dem jeweiligen Ende der Schlauch- und/oder Rohrleitung durch Verschrauben oder Verdrehen oder Verrasten oder Aufschieben oder Aufklippsen montiert wird.
